# EUROPEAN PATENT APPLICATION

(11) **EP 4 761 265 A1**
(43) Date of publication of application: **17.06.2026**
(21) Application number: 24220093.9
(22) Date of filing: 16.12.2024
(51) Int. Cl.: H04N 23/70, H04N 23/80, H04N 23/84

(54) **CONFIGURATION OF VISUAL APPEARANCE RESULTING FROM POSTPROCESSING OF IMAGES CAPTURED BY A CAMERA**

(71) Applicant: Axis AB, 223 69 Lund (SE)
(72) Inventor: Yuan, Song, 223 69 LUND (SE); Ericson, Joakim, 223 69 LUND (SE)
(74) Representative: AWA Sweden AB

(57) **Abstract**

Provided is a device (100), and method as implemented by the device, for configuring a visual appearance of output images (123) from a camera (120) capturing a scene. The device is configured to obtain a first image (121) depicting the scene captured by the camera; obtain a second image (122) depicting the scene (as modified e.g. by a user using an image manipulation/creation software 140); extract a set of one or more visual differences between the first and second images, and determine, based on the extracted set of visual differences, one or more postprocessing operations, such that a third image (123) depicting the scene captured by the camera and subjected to the one or more image postprocessing operations is more visually equal (or similar) to the second image than the first image. A corresponding system, computer program and computer program product are also provided.

## Description

### Technical field

The present disclosure generally relates to the field of postprocessing of images of a scene captured by a camera. More in particular, the present disclosure relates to configuration of the visual appearance of images resulting from such image postprocessing.

### Background

Modern cameras such as monitoring cameras often provide an interface through which a user may (remotely) (re)configure various configuration parameters and image postprocessing operations of the camera. The interface may for example be graphical and accessed via a web page hosted by a server running on the camera and may also provide a live view of a video stream captured by the camera. With such a live view, the user may observe the resulting (visual) changes to the output video stream, and (if deemed necessary) make further changes until a desirable visual appearance of the output video stream is obtained.

As cameras become more capable, the number of configuration parameters and postprocessing operations likely increases, and maintaining such an interface may therefore be cumbersome. In addition, it may be difficult for the user to understand what the parameters and operations are for, and to intuitively understand which of them, and how they, should be changed and/or used in order to make the visual appearance of the output video stream correspond to the desire of the user.

### Summary

The present disclosure aims at further developing contemporary technology, and to provide a solution that at least partially overcomes the above-mentioned issues therewith. The solution includes a method, device, system, computer program, computer-readable storage medium and computer program product as defined by the accompanying independent claims, while embodiments of these entities are defined by the accompanying dependent claims.

According to a first aspect of the present disclosure, there is provided a method for configuring a visual appearance of output images from a camera capturing a scene. The method is computer-implemented, and e.g. to be executed by processing circuitry of a computer system. The method includes obtaining a first image depicting the scene captured by the camera. The method further includes obtaining a second image depicting the scene, where the second image preferably is a version of the first image visually modified to satisfy a desire of one or more users. The method further includes extracting a set of one or more visual differences between the first image and the second image. The method further includes determining, based on the extracted set of one or more visual differences, one or more image postprocessing operations, such that a third image depicting the scene captured by the camera and subjected to the one or more postprocessing operations is more visually equal to the second image than the first image.

The envisaged solution has the benefit that it allows e.g. a user to obtain the first image from the camera, and to modify this image in accordance with a user desire to generate the second image. The second image is then compared (by the computer) to identify what changes the user has made, and those changes can then be automatically applied to visually alter the output stream from the camera such that it is more in line with the visual appearance of the second image than the first image (for example, such that it equals that of the second image instead of the first image). Consequently, the user is not bound to use e.g. an interface for configuration settings provided by the camera, but can instead use any software available to modify the first image such that it is more visually in line with what the user desires. The envisaged solution also reduces the need to create and maintain complex interfaces for modification of all possible camera settings and postprocessing operations, and reduces the computational effort of the camera otherwise required to provide such interfaces.

In one or more embodiments of the method, the method may include capturing the third image of the scene using the camera and (then) subjecting the third image to the one or more image postprocessing operations. This in contrast to e.g. attempting to simulate how an image of the scene captured by the camera and then subjected to the one or more postprocessing operations would look like, which is however also envisaged as one possible solution.

In one or more embodiments of the method, the method may further include providing a preview of the third image subjected to the one or more image processing operations, e.g. to one or more users responsible for providing the second image by modifying the first image. The one or more users may then confirm that the one or more postprocessing operations determined based on the extracted visual differences between the first and second images are in line with what the user desired, and e.g. send a confirmation to e.g. the camera that it should, when capturing future images of the scene, use the one or more postprocessing operations. If not confirmed by the user, the method may include repeating at least the operation of determining the one or more postprocessing operations, perhaps based on further input from the user as part of not confirming the first suggested third image. In other examples, the one or more users may proceed by sending an updated second image, and the method may include once again extracting one or more visual differences, and, based thereon, determine one or more (new, or updated) image postprocessing operations. In some examples, generating the preview may include to e.g. generating the third image in parallel with images of an output video stream for which the one or more postprocessing operations are not applied. This may be particularly suitable for e.g. cameras capable of such parallel processing, as the output video/image stream is then not affected until the user is satisfied with the determined one or more postprocessing operations based on the preview.

In one or more embodiments of the method, the one or more image postprocessing operations may result in (e.g. be such that the generate) a change of at least one of contrast, saturation, brightness, sharpness, white balance, global tone mapping and local tone mapping.

In one or more embodiments of the method, the one or more image postprocessing operations may include addition of at least one of a text overlay, an image overlay, a vector overlay, and a privacy mask.

In one or more embodiments of the method, the method may include providing the first image to, and then obtaining both the first image and the second image from, one or more users. By so doing, the device responsible for performing the method does not need to keep track of e.g. from which image captured by the camera the second image is derived, as it receives both the first and second images and proceed by extracting the visual differences therebetween.

In one or more embodiments of the method, the method may include providing the first image as well as an identifier (such as an identification number or string) of the first image to, and then obtaining the second image as well as the identifier of the first image from, one or more users. By so doing, the device (such as a camera) performing the method may store the first image locally, and use the reference provided by the one or more users in order to identify which locally stored image that is the first image based on which the second image was created.

In one or more embodiments of the method, determining the one or more image postprocessing operations may include calculating at least one of a gain and color matrix from the extracted one or more (visual) differences, and to then apply the at least one of the gain and color matrix as part of the one or more image postprocessing operations (that is, the one or more postprocessing operations may include to apply the at least one of the gain and color matrix).

In one or more embodiments of the method, determining the one or more image postprocessing operations may include vectorizing (using e.g. any conventional tool for such a purpose) at least some of the extracted one or more differences to generate one or more vector commands, and executing the one or more vector commands as part of the one or more image postprocessing operations (that is, the one or more postprocessing operations may include to execute the one or more vector commands).

According to a second aspect of the present disclosure, there is provided a device for configuring a visual appearance of output images from a camera capturing a scene. The device includes processing circuitry configured to perform the operations of the method of the first aspect. For example, the processing circuitry is configured to obtain the first image depicting the scene captured by the camera; obtain the second image depicting the scene; extract the set of one or more visual differences between the first image and the second image, and determine, based on the extracted set of one or more visual differences, the one or more image postprocessing operations as described above.

In one or more embodiments of the device, the device may be a camera such as a monitoring camera.

According to a third aspect of the present disclosure, there is provided a system for configuring a visual appearance of output images from a camera capturing a scene. The system includes a first device, wherein the first device is the device of the first aspect (or any example embodiment thereof as described herein). The system includes the camera for capturing the first image, and a second device that is external to the camera. The second device includes processing circuitry, and the processing circuitry of the second device is configured to receive the first image (from the first device), and to provide an image manipulation and/or image creation software that allows a user to generate the second image by modifying the first image (e.g. by manipulating existing features of the first image and/or by adding one or more additional features of the first image, such as e.g. one or more overlays, privacy masks, and similar). The second device and its processing circuitry is further configured to provide the second image to the processing circuitry of the first device.

In one or more embodiments of the system, the first device of the system may be the camera, for example a monitoring camera as described above.

According to a fourth aspect of the present disclosure, there is provided a computer program that includes computer code that, when run on processing circuitry of a device, causes the device to perform the method of the first aspect (or any example embodiment thereof as described herein). For example, when run on the processing circuitry, the computer code may cause the device to obtain the first image depicting the scene captured by the camera; obtain the second image depicting the scene; extract the set of one or more visual differences between the first image and the second image, and determine, based on the extracted set of one or more visual differences, the one or more image postprocessing operations as described above.

According to a fifth aspect of the present disclosure, there is provided a computer-readable storage medium on which the computer program of the fourth aspect (or any example embodiment thereof as described herein) is stored.

According to a sixth aspect of the present disclosure, there is provided a computer program product that includes the computer-readable storage medium of the fifth aspect.

As used herein, the computer-readable storage medium may e.g. be non-transitory and be provided as (or be) e.g. a hard disk drive (HDD), solid state drive (SSD), USB flash drive, SD card, CD/DVD, and/or as any other storage medium capable of non-transitory storage of data. In other embodiments, the computer-readable storage medium may be transitory and e.g. correspond to a signal (electrical, optical, mechanical, or similar) present on e.g. a communication link, wire, or similar means of signal transferring, in which case the computer-readable storage medium is of course more of a data carrier than a data storing entity.

Other objects and advantages of the present disclosure will be apparent from the following detailed description, the drawings and the claims. Within the scope of the present disclosure and the accompanying claims, it is envisaged that all features and advantages described with reference to e.g. the method of the first aspect are relevant for, apply to, and may be used in combination with also the device of the second aspect, the system of the third aspect, the computer program of the fourth aspect, the computer-readable storage medium of the fifth aspect, and the computer program product of the sixth aspect, and vice versa.

### Brief description of the drawings

Exemplifying embodiments will be described below with reference to the accompanying drawings, on which:
Figure 1 schematically illustrates one or more example embodiments of a device according to the present disclosure;
Figure 2A schematically illustrates a flowchart of one or more example embodiments of a method according to the present disclosure;
Figure 2B schematically illustrates a signaling diagram for a method such as that of Figure 2A;
Figure 3 schematically illustrates an example of obtaining one or more image postprocessing operations as part of a method such as that of Figure 2A;
Figures 4A and 4B schematically illustrate components and functional blocks of various example embodiments of a device as envisaged herein, and
Figure 5 schematically illustrates example embodiments of a computer program, computer program product and computer-readable storage medium as envisaged herein.

In the drawings and Figures thereon, like reference numerals will be used for like elements unless stated otherwise. Unless explicitly stated to the contrary, the drawings show only such elements that are necessary to illustrate the example embodiments, while other elements, in the interest of clarity, may be omitted or merely suggested. As illustrated in the Figures, the (absolute or relative) sizes of elements and regions may be exaggerated or understated vis-à-vis their true values for illustrative purposes and, thus, are provided to illustrate the general structures of the embodiments.

### Detailed description

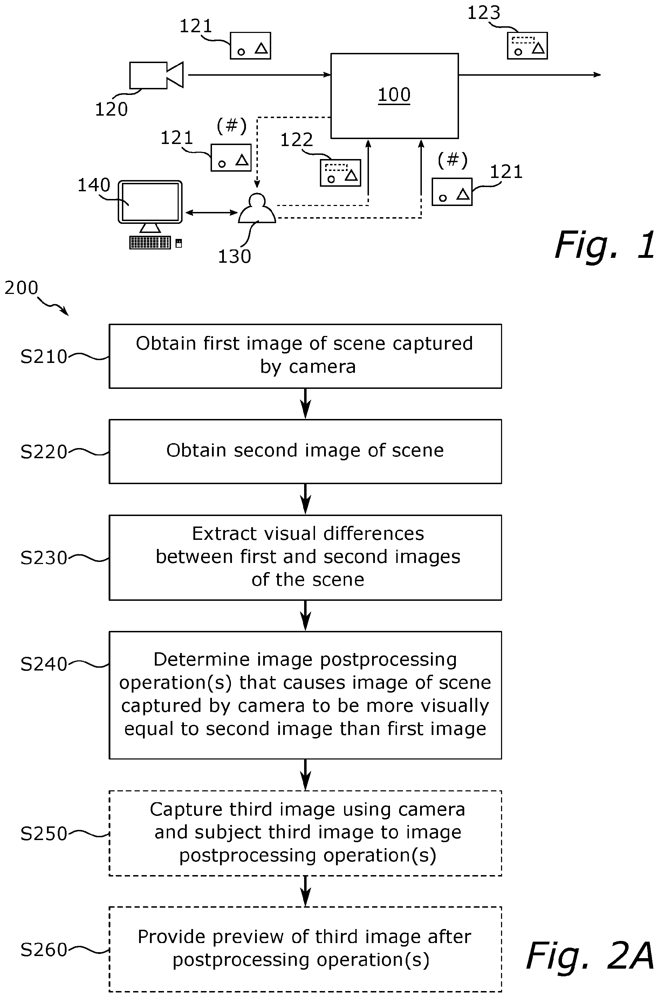

How the present disclosure envisages to provide a more user-friendly and flexible way of configuring a visual appearance of images output from a camera will now be described in more detail, first with reference to Figures 1 and 2A.

Figure 1 schematically illustrates examples of a device 100 for such visual configuration, while Figure 2A schematically illustrates examples of a method 200 for such visual configuration as performed by the device 100, according to the present disclosure. The device 100 is configured to obtain (e.g. as part of an operation S210 of the method 200) a first image 121 of a scene. The first image 121 is e.g. captured by a camera 120 and provided to the device 100. The camera 120 may for example be a monitoring camera. The device 100 and camera 120 maybe separate entities, or the device 100 may be the camera 120 itself.

The device 100 is further configured to obtain (as part of e.g. an operation S220 of the method 200) a second image 122 of the scene, wherein it is expected that the second image 122 shows the same scene but has been visually modified in accordance with a desire of one or more users (such as a user 130). For example, as envisaged herein, a "same scene" means that the scene has been captured using a same camera field-of-view, although the contents of the scene may of course have changed due to e.g. one or more objects moving in the scene, changed lighting conditions, and similar.

For example, the device 100 may be configured to send (a copy of) the first image 121 to the user 130. Optionally, the device 100 may also send an identifier # of the first image 121, such as e.g. a text string, number, or similar, wherein the device 100 has associated the identifier # with the particular first image 121. The user 130 may receive the first image 121 from the device 100, and then use any suitable software solution for image manipulation and/or image creation, such as provided by/on an additional device 140 such as a personal computer, tablet, smartphone, workstation, server, or similar. Importantly, the user 130 is not bound to use any specific software or interface for visually modifying the first image 121, but may select to use any software suitable for modifying the first image 121 in accordance with a desire of the user 130. The result of modifying the first image 121 using the additional device 140 is the second image 122. The user 130 may send the second image 122 to the device 100 using e.g. an interface, such as an API, that may be provided for this purpose by the device 100. Such an interface may also be provided to allow the user to receive the first image 121 from the device 100, e.g. upon request from the user 130. The user 130 may also, in some examples, send a copy of the first image 121 to the device. In other examples, if having received the identifier # of the first image 121, the user 130 may instead (or in addition) send the identifier # of the first image 121. In the latter case, it is assumed that the device 100 has stored a copy of the first image 121 such that it can retrieve the first image 121 based on the identifier # provided by the user 130. In any case, it is envisaged that the device 100 will be in possession of (copies of) both the first image 121 and the modified second image 122.

The device 100 is further configured to extract (as part of e.g. an operation S230 of the method 200) visual differences between the first and second images 121, 122. For example, the device may start by subtracting the first image 121 from the second image 122 to obtain a difference ("delta") image indicative of how the user 130 has modified the first image 121 in order to obtain the second image 122. For example, such a difference image may be created by subtracting the value (or values, if the images have more than one channel, such as color images) of each pixel of the first image 122 from that/those of the corresponding pixel of the second image 122, and similar. Other examples of how to identify the differences between the two images 121 and 122 are of course also envisaged.

After having identified the visual differences between the first and second images 121, 122, the device 100 is further configured to determine (as part of e.g. an operation S240 of the method 200) one or more image postprocessing operations that should be applied to the first image 121 in order to make the first image 122 more visually similar (or equal) to the second image 122.

As envisaged herein, the term "visual differences" includes any modification of the first image 121 that would be visible to an observer when comparing the first and second images 121, 122. For example, to create such a visual difference, the user 130 may modify the first image 121 by changing image contrast, image saturation, image brightness, image sharpness, image white balance, global tone mapping, local tone mapping, and similar. More generally, any changes created by image manipulation software are envisaged as being encompassed by the term "visual difference". As other examples, visual differences may be created by the user 130 adding one or more overlays to the first image 121, such as e.g. text overlays, image overlays, vector overlays, and similar. As yet another example, the user 130 may modify the first image 121 by adding one or more privacy masks, i.e. areas of the first image 121 that should not be visible (or at least made more difficult to identify objects in) to a viewer of the image. As envisaged herein, overlays and masks may be defined by drawing shapes on the first image 121, e.g. by suitable tools for drawing of geometrical shapes such as circles, triangles, rectangles, or any type of polygon object, or e.g. by defining such shapes by freehand. Text overlays may be created by e.g. selecting one or more target regions in an image and thereafter typing in one or more numbers, letters, and similar. Changes may also be created by e.g. selecting one or more regions of an image in which a tone mapping should be changed, e.g. to make certain colors more visually distinct and/or to make certain other colors dimmer, and similar. Such tone mapping changes may be both local or global, e.g. applicable to only parts of the image or to the whole of the image. Changes may be made by for example inserting one or more geometrical objects filled with one or more colors, wherein such filling may be opaque or at least partially transparent, and/or filled with one or more predefined patterns such as lines, dots, circles, hatches, and similar.

Consequently, as envisaged herein, the one or more image postprocessing operations may be operations that, if applied to the first image, at least partially recreate the changes to the first image 121 made by the user 130 when creating the second image 122. For example, the device 100 may identify, based on the difference image, that a text overlay has been inserted in a certain region of the image, and a corresponding postprocessing operation may include inserting such a text overlay at that location. As another example, the device 100 may identify that a privacy mask has been inserted in a particular region of the image, and a corresponding postprocessing operation may include to recreate such a privacy mask, and similar for any thinkable visual modification. If the changes made include addition of one or more vector overlays, the difference image (e.g. delta buffer) may be vectorized by the device 100 to capture such vector graphics. The vector graphics may then be turned into a series of vector commands executable by e.g. a suitable vector graphics library. If the changes made include e.g. a change in color or similar, i.e. something that would require a change in one or more imaging parameters used by the camera 120, the device 100 may calculate for example a gain and/or color matrix based on comparison of the first and second images 121, 122. Such a color matrix may then be used to determine a desired (global or local) tone mapping and e.g. white balance required to recreate the second image 122 from the first image 121.

As envisaged herein, the user 130 may for example add overlays and/or masks (such as privacy masks). Text overlays may be defined by position, font, font-size, font-color, orientation, letter spacing, shadowing effects, and similar. Image overlays may be defined by position, size, image content, and similar. Vector overlays or masks may include e.g. defined bounding boxes or polygons with specified line width, line color, size, fill color, fill opacity, fill pattern, and similar. Tools like "magic pen tool" or similar may be used to define free-shape masks and similar. The user 130 may for example change imaging parameters, to change contrast, saturation, brightness, sharpness, and similar, and/or e.g. change colors (to e.g. make grass more green, sky and/or water more blue, and similar), all depending on a desired visual result by the user 130. Tools suitable for such modifications may include e.g. illustrating tools, photo/image manipulation tools, CAD software, tools for vector image manipulation/creation, or any other suitable tool, including also one or more tools implementing machine learning/ artificial intelligence in order to e.g. make changes to an image (such as the first image 121) based on user input in e.g. a prompt, by voice commands, and similar.

In some examples, the device 100 may vectorize the difference image by using any suitable software/library for this purpose. As envisaged herein, "vectorizing" means to convert from raster image data to vector data, i.e. how to recreate an image is defined by one or more mathematical expressions instead of raw pixel data. For example, vectorizing a raster image of a line may result in a vector command to draw a line between corresponding two points of the image, with a line width and color corresponding to that of the rasterized line. Vectorizing a raster image of a circle may result in a vector command to draw a circle at a specific corresponding center point, with a line color, fill color and radius correspond to those of the rasterized circle, and similar for any other thinkable shape/object of a raster image suitable for such rasterization.

After having determined the one or more image postprocessing operations that the first image 121 (as captured by the camera 120) needs to be subjected to in order to recreate an image more visually similar (or equal) to the second image 122, the device 100 may be configured to apply the one or more postprocessing operations as part of an image postprocessing chain, to generate a third image 123 that is more visually similar to the second image 122 than to the first image 121, as a result of applying the one or more postprocessing operations. The third image 123 may e.g. be captured (as part of e.g. an operation S250 of the method 200) by the camera 120 and then subjected to the postprocessing operation(s), and be output by the device 100.

As used herein, that two images are visually equal does not exclude e.g. that e.g. one of the images is scaled and/or rotated vis-à-vis the other one. Instead, "visually equal" (or similar) means that the two images depict a same scene (although not necessarily a same momentary image of the scene) with similar visual appearance, i.e. such that the two images has e.g. the same white balance, color/tone mappings, same overlays (such as graphics, text, and similar), same privacy masks, and similar. Phrased differently, two images may be considered to be visually equal/similar if one can be transformed into the other by operations such as scaling, rotating, and perhaps translating, but without e.g. alternating any of the above listed properties. Consequently, performing the method as envisaged herein but e.g. rescaling, translating or rotating the third image still counts as the third image being visually equal/similar to the second image.

In some examples, the device 100 may be configured to generate a preview of the third image 123, by e.g. simulating an operation of the camera 120 and the effect of the postprocessing operation(s), or by using the camera 120 to actually capture another image of the scene and then subjecting this image to the postprocessing operation(s). As part of e.g. an operation S260, the device 100 may provide the preview of the third image 123 to the user 130, such that the user 130 may decide whether the one or more determined postprocessing operations generate (when applied to an image captured by the camera 120) the desired visual appearance of the output image 123 from the device 100.

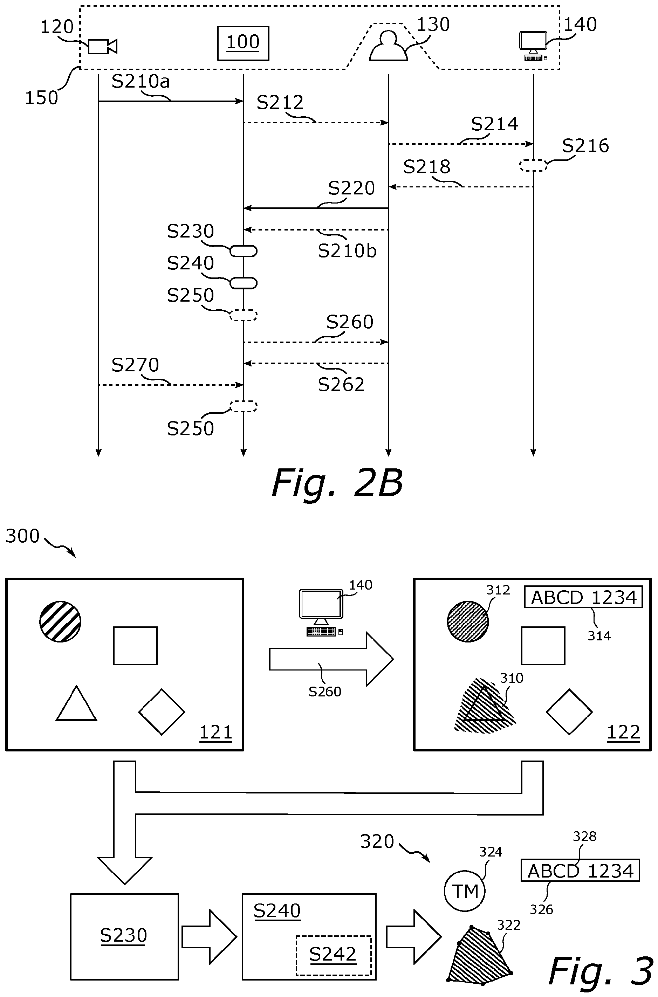

Figure 2B schematically illustrates a signaling diagram of examples of how information may be exchanged between the camera 120, the device 100, the user 130 and the additional device 140 used by the user 130 to create the second image 122. The arrows and rectangles in Figure 2B illustrate various example operations of the method 200, wherein dashed arrows and outer lines indicate operations that are optional.

The device 100 may receive the first image 121 from the camera 120 e.g. as part of an operation S210a, and the device 100 may send the first image 121 to the user 130 as part of an operation S212. The user 130 may provide the first image 121 to the additional device as part of an operation S214, use a software of the additional device 140 in order to generate (as part of an operation S216) the second image 122. For example, operation S214 may include the user 130 uploading (or transferring) the first image 121 to the additional device 140, and the user 130 may receive the second image 122 from the additional device 140 as part of an operation S218. Of course, the user 130 may not receive any of the first and second images 121, 122 directly, but instead orchestrate a transferring of the first image from the device 100 to the additional device 140, and a transferring of the second image from the additional device 140 to the device 100. In any way, the result is that the device 100 comes into possession of both the first image 121 and the second image 122, i.e. as part of the operation S220 and optionally an operation S210b (of receiving a copy of the first image 121 and/or the identifier # of the first image 121). As part of the operation S230, the device 100 extracts the visual differences, and as part of the operation S240 the device determines the one or more image postprocessing operations required to make the output images from the device 100/camera 120 more visually similar/equal to the second image 122 than the first image 121 as described herein. As part of the operation S250 the device 100 may actually generate and output the third image 123, e.g. by modifying the first image 121 using the one or more postprocessing operations, or e.g. by using the camera 120 to capture a new image of the scene and instead using the one or more postprocessing operations for this new image.

In some examples, the device 100 may send (as part of the operation S260) a preview of the third image 123 to the user 130, and the user 130 may inspect the preview and return (as part of an operation S262) an indication of whether the user 130 is satisfied with the result or not. If the user 130 is satisfied, the device 100 may reconfigure the camera 120 and implement the image postprocessing operation(s) on further images captured by the camera, such that the visual appearance of later output images from the device 100 and/or camera 120 are in line with those of the second image 122. For example, the device 100 may receive one or more further images from the camera 120 (as part of an operation S270), and postprocess/generate corresponding further third images (as part of e.g. an additional operation S250). If the user 130 is not satisfied with the determine/proposed postprocessing operation(s), part of the process (e.g. operations S214, S216, S218, S220, S230, S240) may be repeated until satisfaction is obtained.

Figure 3 schematically illustrates one example 300 of how the user 130 may modify the first image 121 to create the second image 122, and how the device 100 may proceed to generate/determine the one or more image postprocessing operations. The first image 121 as captured and e.g. postprocessed by the device 100 using previous settings includes a plurality of objects. The user 130 uses the additional device 140 to (as part of the operation S260) generate the second image 122. In this example, the user has added a privacy mask 310 around the triangular object. The user has also adjusted a local tone mapping in a region 312, i.e. the circle has been made a bit darker, and inserted a text overlay 314 in the upper right corner of the image. The device 100, as part of operation S230, compares the first and second images 121, 122 to find a difference image, and determines (as part of the operation S240) a set of image postprocessing operations 320 required to make further images captured by the camera 120 more visually similar/equal to the second image 122 than the first image 121. In some example, the operation S240 may include an operation S242 of vectorizing the difference image, e.g. to find a set of one or more vector commands that are to be include/performed as part of the postprocessing operations 320. In this particular example, it is determined that the required postprocessing operations include an operation 322 of adding a privacy mask in a particular region of the image, to perform a local tone mapping 324 in another particular region of the image, and to create the text overlay by adding a bounding box (e.g. by a suitable vector command) as well as a string 328 of text characters in the upper right corner of the image. The device 100 then e.g. captures a new image using the camera 120, subjects the new image to the image postprocessing operations 320, and the resulting third image 123 is envisaged to be more visually similar/equal in appearance to the second image 122 than to the first image 121, thus obtaining the goal of allowing the user 130 to more easily configure the visual appearance of an output stream of images from the camera 120 by just providing the second image 122 indicative of how the user 130 wants to modify the current settings/postprocessing operations.

Herein, it is envisaged also that e.g. graphical overlays such as those to provide text and or images on the image need not be static, but may include e.g. placeholders for information that will change with time. For example, the user may create the second image 122 by inserting a text overlay with a tag indicative of dynamic content, such as for example a date, timestamp, temperature, or any other parameter value, and the device 100 maybe configured to detect such dynamic content (e.g. based on what tag the user has inserted), and to take this into account when generating the third image 123. For example, a text overlay including a tag #datetime may indicate that "#datetime" is to be replaced with a current date and time when generating the third image 123, and similar. Phrased differently, two images may be considered to be visually similar/equal even if they do not show exactly the same text or graphics, but as long as they show the same type of text (such as dates, times, temperatures, etc.) and/or graphics, preferably at same or similar locations in each image.

Herein, and as illustrated in Figure 2B, it is also envisaged to provide a system 150 including the (first) device 100, camera 120 and additional (second) device 140, i.e. a system for configuring the visual appearance of output images from the camera 140 capturing the scene. In some examples, the camera 140 may be a monitoring camera. In some examples, the first device 100 maybe the camera 140.

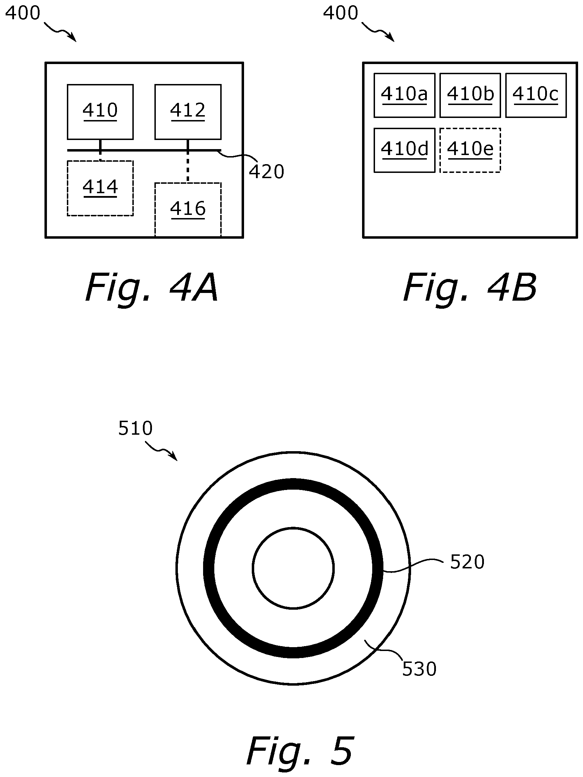

Figure 4A schematically illustrates one or more examples of a device 400 (such as the device 100) for performing the method 200 of configuring the visual appearance as envisaged herein. The device 400 may for example be a camera (such as a monitoring camera), or e.g. some other device external to such a camera but capable of obtaining images captured by the camera. The device 400 includes at least a processor (or "processing circuitry") 410 and optionally a memory 412. As used herein, a "processor" or "processing circuitry" may for example be any combination of one or more of a suitable central processing unit (CPU), multiprocessor, microcontroller (µC), digital signal processor (DSP), application-specific integrated circuit (ASIC), field-programmable gate-array (FPGA), graphics processing unit (GPU), etc., capable of executing software instructions stored in the memory 412. The memory 412 may be external to the processor 410, or may be internal to the processor 410. As used herein, a "memory" may be any combination of random-access memory (RAM) and read-only memory (ROM), or any other kind of memory capable of storing the instructions. The memory 412 contains (i.e. stores) instructions that, when executed by the processor 410, cause the device 400 to perform a method as described herein (i.e. the method 200 or any embodiments thereof). The device 400 may further include one or more additional items 414 which may, in some situations, be useful for performing the method. In case the device 400 is a camera, the additional item(s) 414 may then include e.g. an image sensor and for example one or more lenses for focusing light from a scene on the image sensor, such that the camera may capture images of a scene as part of performing the envisaged method. The camera may be a video camera, configured to capture a stream of images. The additional item(s) 414 may also include e.g. various other electronics components needed for capturing the scene, e.g. to properly operate the image sensor and/or lenses as desired. Performing the method in a monitoring camera may be useful in that the processing is moved to "the edge", i.e. closer to where the actual scene is captured compared to if performing e.g. image analysis somewhere else (such as at a more centralized processing server or similar).

The device 400 may for example be connected to a network such that the results from performing the method 200 may be transmitted to e.g. a user/operator, and/or to another device such as a server, or similar. For this purpose, the device 400 may include a network interface 416, which may be e.g. a wireless network interface (as defined in e.g. any of the IEEE 802.11 or subsequent standards, supporting e.g. Wi-Fi) or a wired network interface (as defined in e.g. any of the IEEE 802.3 or subsequent standards, supporting e.g. Ethernet). The network interface 416 may for example also support any other wireless standard capable of transferring encoded video, such as e.g. Bluetooth or similar. The various components 410, 412, 414 and 416 (if present) may be connected via one or more communication buses 420, such that these components may communicate with each other, and exchange data as required.

The device 400 may for example be a monitoring camera mounted or mountable on a building or other support structure, e.g. in form of a PTZ-camera or e.g. a fisheye-camera capable of providing a wider perspective of the scene, or any other type of monitoring/surveillance camera. In any such examples of the device 400, it is envisaged that the device 4600 may include all necessary components (if any) other than those already explained herein, as long as the device 400 is still able to perform the method 200 or any embodiments thereof as envisaged herein. The various components of the device 400 may in some examples be further configured to implement the method operations as described herein (such at least S210, S220, S230 and S240). In other examples, the device 400 may be distributed across multiple physical and/or logical entities, to form e.g. a computer system or similar, wherein two or more of the operations (and/or two or more different suboperations of a same operation) may be performed on/by different physical and/or logical entities, e.g. as part of a distributed computing process or similar.

Figure 4B schematically illustrates one or more embodiments of the device 400 in terms of a number of functional/computing blocks 410a, 410b, 410c and 410d. Each such block 410a-410d is responsible for performing a functionality in accordance with a particular operation of the method 200, as shown in the flowchart of Figure 2A and/or 2B. For example, one such functional block 410a may be configured obtain the first image of the scene. The block 410a may be referred to as a first image obtaining block/module, and similar. Another block 410b may be configured to obtain (as in operation S220) the second image of the scene (e.g. from the user 130). The block 410b may be referred to as a second image obtaining block/module, and similar. Another block 410c may be configured to extract (as in operation S230) the visual difference between the first and second images, and may be referred to as e.g. a difference extraction block/module, a differentiator, or similar. Yet another block 410d may be configured to determine the one or more image postprocessing operations required to make images captured by the camera more similar/equal to the second image than the first image. The block 410d may be referred to as a postprocessing operations determining block/module, and similar. The device 400 may optionally include e.g. one or more additional function blocks, such as one or more blocks 410e, such as e.g. a block for capturing the third image and subjecting the third image to the postprocessing operations determined by block 410d (as in operation S250), to provide the preview of the third image (such as in operation S260), and/or to provide/perform any operation of the method 200 as envisaged herein but not already covered by any of the blocks 410a-d.

In general terms, each functional block 410a-e may be implemented in hardware or in software. Preferably, one or more or all functional blocks 410a-e may be implemented by the processing circuitry 410, possibly in cooperation with the storage medium/memory 412 and/or the communications interface 416. The processing circuitry 410 may thus be arranged to from the memory 412 fetch instructions as provided by a functional block 410a-e, and to execute these instructions and thereby perform any operations of the method 200 or any embodiment thereof performed by/in the device 400/100 as disclosed herein.

Figure 5 schematically illustrates a computer program product 510 including a computer-readable means/storage medium 530. On the computer storage medium 530, a computer program 520 (including computer code) can be stored, which computer program 520 can cause (when the code is executed) the processor 410 and thereto operatively coupled entities and devices, such as the communications interface 416 and the memory 412, of the device 400 to execute method 200. The computer program 520 and/or computer program product 510 may thus provide means for performing any operations of the method 200 (or any embodiment thereof) performed by the device 400 as disclosed herein.

In the example of Figure 5, the computer program product 510 and computer-readable storage medium 530 are illustrated as an optical disc, such as a CD (compact disc) or a DVD (digital versatile disc) or a Blu-Ray disc. The computer program product 510 and computer-readable storage medium 530 could also be embodied as a memory, such as a random-access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory. Thus, while the computer program 520 is here schematically shown as a track on the depicted optical disk, the computer program 520 may be stored in any way which is suitable for the computer program product 510 and computer-readable storage medium 530. The storage medium 530 maybe non-transitory or transitory.

In summary of all of the above, the present disclosure improves upon contemporary technology in that it provides an improved way of allowing a user to (re)configure the visual appearance of images captured by a camera. Instead of relying on complex interfaces exposing multiple configuration parameters, and/or visually cluttered interfaces with a risk of confusing the user, the envisaged solution instead allows the user to get an image of the scene as captured by the camera and then postprocessed using the current settings of the camera. The user may then use any software preferred to visually modify the image to be in line with a desire of the user, and the envisaged solution than compares the original and modified images in order to automatically figure out how at least the postprocessing operations should be modified in order to make future images captured by the camera more visually similar/equal to the modified image provided by the user. Thus, the user does not need to use any complex interface, and no such interface needs to be provided and maintain by the provider of the camera.

Although features and elements may be described above in particular combinations, each feature or element may be used alone without the other features and elements or in various combinations with or without other features and elements. Additionally, variations to the disclosed embodiments may be understood and effected by the skilled person in practicing the claimed invention, from a study of the drawings, the disclosure, and the appended claims.

In the claims, the words "comprising" and "including" does not exclude other elements, and the indefinite article "a" or "an" does not exclude a plurality. The mere fact that certain features are recited in mutually different dependent claims does not indicate that a combination of these features cannot be used to advantage.

### List of reference numerals

- 100: device
- 120: camera
- 121: first image
- 122: second image
- 123: third image
- 130: user
- 140: device for image modification
- 150: system
- 200: method
- S210, S220, S230, S240: method operations
- S250, S260: optional method operations
- 300: example of image modification/settings reconfiguration
- 310: privacy mask
- 312: local tone mapping
- 314: text/graphics overlay
- 320, 322, 324, 326, 328: image postprocessing operations
- 400: device
- 410: processor/processing circuitry
- 412: memory
- 414: optional additional items
- 416: communications interface
- 420: data bus
- 410a-410e: functional blocks
- 510: computer program product
- 520: computer program
- 530: computer-readable storage medium

## Claims

1. A computer-implemented method (200) for configuring a visual appearance of output images from a camera (120) capturing a scene, comprising:
- obtaining (S210) a first image (121) depicting the scene captured by the camera;
- obtaining (S220) a second image (122) depicting the scene;
- extracting (S230) a set of one or more visual differences between the first image and the second image, and
- determining (S240), based on the extracted set of one or more visual differences, one or more image postprocessing operations (320), such that a third image (123) depicting the scene captured by the camera and subjected to the one or more image postprocessing operations is more visually equal to the second image than the first image.

2. The method according to claim 1, further comprising capturing (S250) the third image of the scene using the camera and subjecting the third image to the one or more image postprocessing operations.

3. The method according to claim 2, further comprising providing (S260), to e.g. one or more users (130) responsible for providing the second image by modifying the first image, a preview of the third image subjected to the one or more image postprocessing operations.

4. The method according to any one of claims 1 to 3, wherein the one or more image postprocessing operations result in a change of at least one of contrast, saturation, brightness, sharpness, white balance, global tone mapping and local tone mapping.

5. The method according to any one of the preceding claims, wherein the one or more image postprocessing operations comprise addition of at least one of a text overlay, an image overlay, a vector overlay, and a privacy mask.

6. The method according to any one of the preceding claims, wherein the method comprises providing the first image to, and then obtaining both the first image and the second image from, one or more users.

7. The method according to any one of claims 1 to 5, wherein the method comprises providing the first image as well as an identifier of the first image to, and then obtaining the second image as well as the identifier of the first image from, one or more users.

8. The method according to any one of the preceding claims, wherein said determining comprises calculating at least one of a gain and color matrix from the extracted one or more differences, and including application of said at least one of a gain and color matrix as part of the one or more image postprocessing operations.

9. The method according to any one of the preceding claims, wherein said determining comprises vectorizing at least some of the extracted one or more differences to generate one or more vector commands, and executing the one or more vector commands as part of the one or more image postprocessing operations.

10. A device (100) for configuring a visual appearance of output images from a camera (120) capturing a scene, comprising processing circuitry configured to:
- obtain a first image (121) depicting the scene captured by the camera;
- obtain a second image (122) depicting the scene;
- extract a set of one or more visual differences between the first image and the second image, and
- determine, based on the extracted set of one or more visual differences, one or more image postprocessing operations (320), such that a third image (123) depicting the scene captured by the camera and subjected to the one or more image postprocessing operations is more visually equal to the second image than the first image.

11. The device according to claim 10, wherein the device is the camera (120).

12. A system (150) for configuring a visual appearance of output images from a camera capturing a scene, comprising:
a first device (100, 400) according to claim 10;
a camera (120) for capturing the first image of the scene;
a second device (140) external to the camera, wherein the second device comprises processing circuitry, wherein the processing circuitry of the second device is configured to receive the first image, provide an image manipulation and/or image creation software allowing a user to generate the second image by modifying the first image, and to provide the second image to the processing circuitry of the first device.

13. The system according to claim 12, wherein the camera is a monitoring camera, and wherein the first device is the monitoring camera.

14. A computer program (520) comprising computer code that, when run on processing circuitry (410) of a device (400), causes the device to:
- obtain a first image (121) depicting the scene captured by the camera;
- obtain a second image (122) depicting the scene;
- extract a set of one or more visual differences between the first image and the second image, and
- determine, based on the extracted set of one or more visual differences, one or more image postprocessing operations (320), such that a third image (123) depicting the scene captured by the camera and subjected to the one or more image postprocessing operations is more visually equal to the second image than the first image.

15. A computer program product (510), comprising a computer-readable storage medium (530) on which the computer program (520) according to claim 14 is stored.
